**Europäisches Patentamt**

**European Patent Office**

**Office européen des brevets**

(19)

(11) Numéro de publication: **0 166 059**
**B1**

(12) # FASCICULE DE BREVET EUROPEEN

(45) Date de publication du fascicule du brevet:
**30.03.88**

(51) Int. Cl.⁴: **F 16 H 55/18**

(21) Numéro de dépôt: **84401329.2**

(22) Date de dépôt: **25.06.84**

(54) Dispositif antivibratoire pour transmission mécanique.

(43) Date de publication de la demande:
**02.01.86 Bulletin 86/1**

(45) Mention de la délivrance du brevet:
**30.03.88 Bulletin 88/13**

(84) Etats contractants désignés:
**AT BE CH DE GB IT LI NL SE**

(56) Documents cités:
**FR - A - 2 062 000**
**FR - A - 2 130 894**
**FR - A - 2 284 802**
**US - A - 3 682 015**

(73) Titulaire: **SCOMA - ENERGIE, Sarl dite:, 11-13 Rue Forest, F-75018 Paris (FR)**
Titulaire: **Louradour, Guy, 10 rue Marcelin Berthelot, F-93100 Montreuil (FR)**
Titulaire: **Gironnet, Bernard, 28 rue Paul Bert, F-92150 Suresnes (FR)**

(72) Inventeur: **Louradour, Guy, 10 rue Marcelin Berthelot, F-93100 Montreuil (FR)**
Inventeur: **Gironnet, Bernard, 28 rue Paul Bert, F-92150 Suresnes (FR)**
Inventeur: **Redele, Jean Emile Amédée, 11-13 rue Forest, F-75018 Paris (FR)**

(74) Mandataire: **Pinguet, André, CAPRI 28 bis, avenue Mozart, F-75016 Paris (FR)**

## Description

La présente invention a pour objet un dispositif antivibratoire pour transmission mécanique, à engrenage, du type comportant un rattrapage de jeu ou un amortisseur de vibrations en vue d'éviter les bruits et les ruptures de dents.

Dans les installations comportant un moteur, un réducteur ou un multiplicateur à engrenages, et un récepteur, on observe des destructions rapides d'engrenage dues aux vibrations de torsion de la ligne d'arbre. Ces destructions sont liées à la rupture du contact entre les dents de deux roues en engrènement. La rupture du contact peut être provoquée par les mouvements oscillatoires des éléments de la ligne d'arbre. Ces ruptures de contact sont la cause de bruit et de destruction rapide de la denture par un martèlement (chocs) continu aux régimes dangereux. Pour éviter la rupture du contact, il faut que l'amplitude A du couple oscillatoire soit inférieure au couple moteur moyen, $C_0$ égal au couple récepteur.

Pour éviter cette rupture, dans le cas où la valeur absolue A de l'amplitude du couple oscillatoire est supérieure au couple moteur moyen $C_0$, on a proposé de précontraindre les dents par un couple interne $C_1$ qui vient s'ajouter au couple moteur $C_0$, uniquement au niveau des engrenages. C'est le pignon à rattrapage de jeu. Un tel pignon comporte une roue principale et une roue secondaire, toutes deux en engrènement avec un pignon moteur, seule la roue principale étant calée sur l'arbre de sortie et les deux roues étant sollicités en rotation l'une par rapport à l'autre par au moins un ressort. Cette disposition peut être adoptée aussi bien sur le pignon entraîné que sur le pignon moteur, les deux solutions étant équivalentes.

Cependant, il est apparu qu'une telle mesure est insuffisante dans de nombreux cas. C'est un but de la présente invention de proposer un dispositif permettant de supprimer les ruptures de contact entre les dents des pignons en engrènement dans tous les cas rencontrés en pratique.

Conformément à la présente invention, un dispositif de transmission mécanique incluant un engrenage comportant au moins un pignon constitué de deux roues, une roue principale montée sur un arbre et en engrènement avec un pignon pour transmettre le couple moteur, et une roue secondaire de rattrapage de jeu non calée sur l'arbre, mais en engrènement avec le pignon, la roue principale et la roue secondaire étant sollicitées en rotation l'une par rapport à l'autre de façon à maintenir les dents de la roue principale en contact avec les dents du pignon, par création d'un couple interne amorti par un dispositif de frottement qui est prévu entre les deux roues du pignon (comme connu du document US-A-3 682 015 révélant les caractéristiques du préambule de la revendication 1) est caractérisé en ce que ledit dispositif de frottement comporte une liaison à coincement et frottement, autorisant la rotation libre de la roue secondaire par rapport à la roue principale dans le sens du rapprochement des dents de la roue principale vers les dents du pignon, et imposant un frottement prédéterminé à la rotation dans l'autre sens de la roue secondaire par rapport à la roue principale.

Selon une autre caractéristique de l'invention, au moins l'une des liaisons moteur-engrenage, engrenage-récepteur comporte un arbre élastique de transmission ou barre d'accord dont les dimensions sont choisies pour que cette barre d'accord soit le siège d'un noeud de vibration, et, avantageusement, les pièces mécaniques solidaires des extrémités d'une barre d'accord sont en frottement l'une contre l'autre avec interposition d'une garniture dissipatrice d'énergie.

D'autres caractéristiques de l'invention apparaîtront au cours de la description qui va suivre, donnée à titre d'exemple non limitatif en regard des dessins ci-joints, et qui fera bien comprendre comment l'invention peut être réalisée.

Les dessins montrent:

figure 1, une vue en coupe axiale d'une transmission selon l'invention, comportant deux pignons en engrènement, la coupe étant faite dans le plan passant par les axes des deux pignons;

figure 2, une vue d'un détail de la figure 1;

figure 3, une vue d'un autre détail de la figure 1;

figure 4, une vue d'un autre détail de la figure 1;

figure 5, une vue analogue à la figure 1 d'une variante.

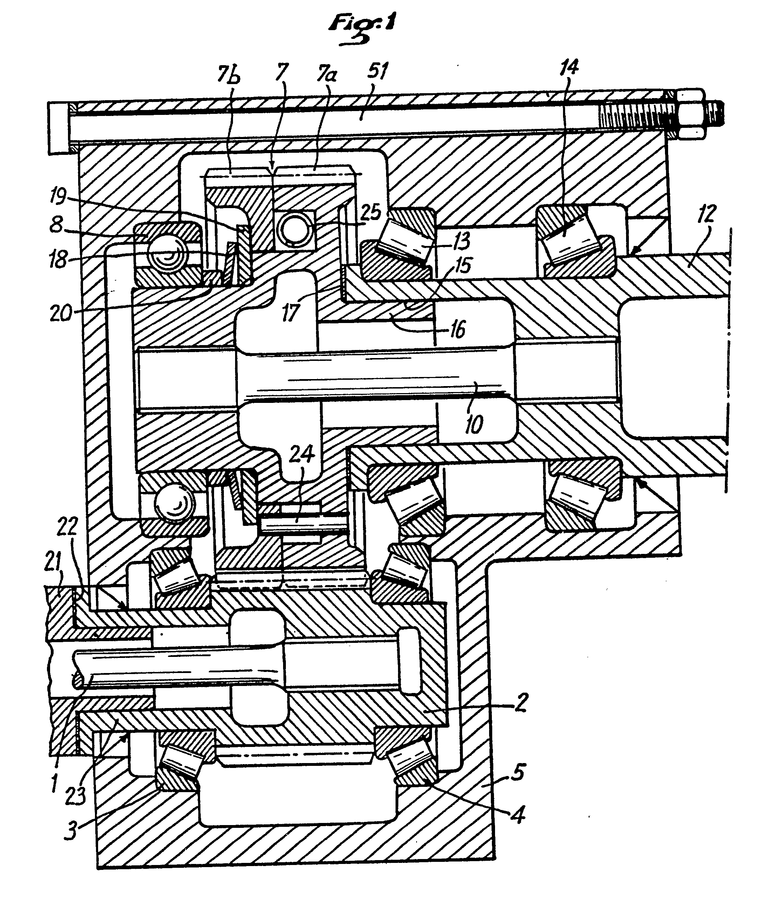

La transmission représentée à titre d'exemple sur les figures 1 à 4 comprend essentiellement un arbre moteur 1, un pignon moteur 2, solidaire de l'arbre 1, monté sur des roulements ou des paliers appropriés 3, 4 dans un carter 5, un pignon de sortie 7 comprenant une roue principale 7a et une roue secondaire 7b de rattrapage de jeu et de blocage (dite encore contre-pignon à rattrapage de jeu), la roue principale étant montée sur un roulement ou palier 8 et la roue secondaire étant montée à glissement sur la roue principale et un arbre de sortie 10 sur lequel peut être monté un manchon d'entraînement 12. Bien entendu, les rôles des pignons moteurs et entraînés peuvent être inversés. Le manchon 12 est monté sur le carter au moyen de roulements ou paliers 13, 14 et est monté à glissement en 15 sur une douille 16 solidaire de la roue principale 7a. En outre, le manchon 12 et la roue 7a peuvent être sollicités en appui l'un contre l'autre dans in plan radial ou toute autre surface de révolution, avec interposition d'une garniture 17 de dissipation d'énergie. La roue 7b est maintenue en appui élastique contre la roue principale 7a, et celle-ci contre le manchon 12 à travers la garniture 17, par un ressort axial ou longitudinal 18 (rondelle belleville) avec interposition d'une rondelle 19. Le ressort 18 prend appui sur une bague 20, elle-même en appui contre le roulement ou butée 8. Un montage analogue peut être prévu pour le pignon moteur 2, avec un manchon moteur 21, calé sur l'arbre moteur 1 avec interposition d'une garniture dissipatrice d'énergie 22. Le manchon est engagé à l'intérieur d'une douille 23 solidaire du pignon 2.

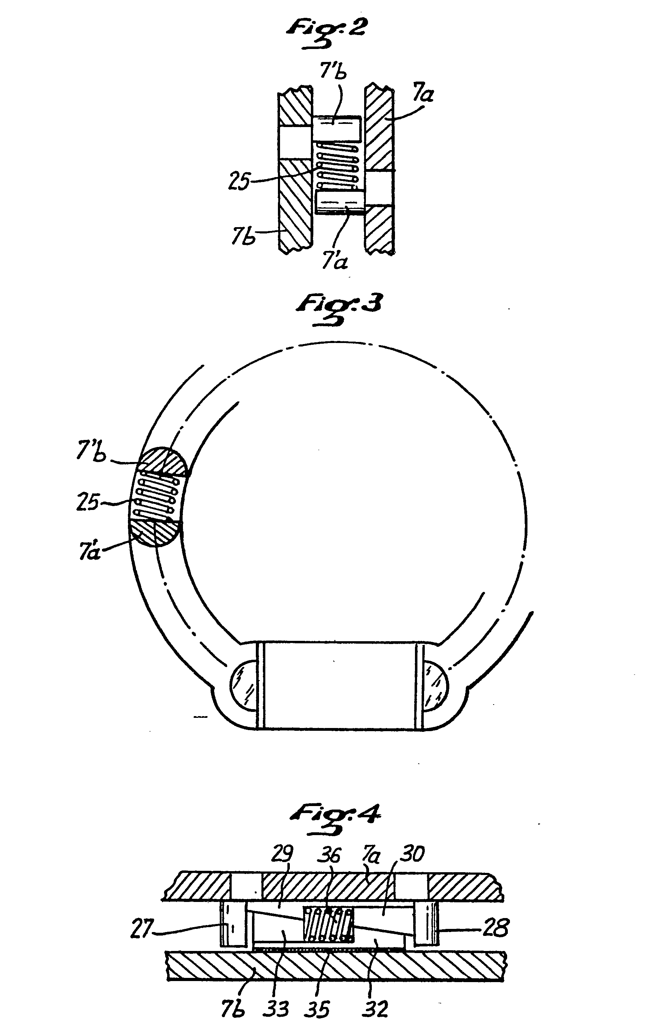

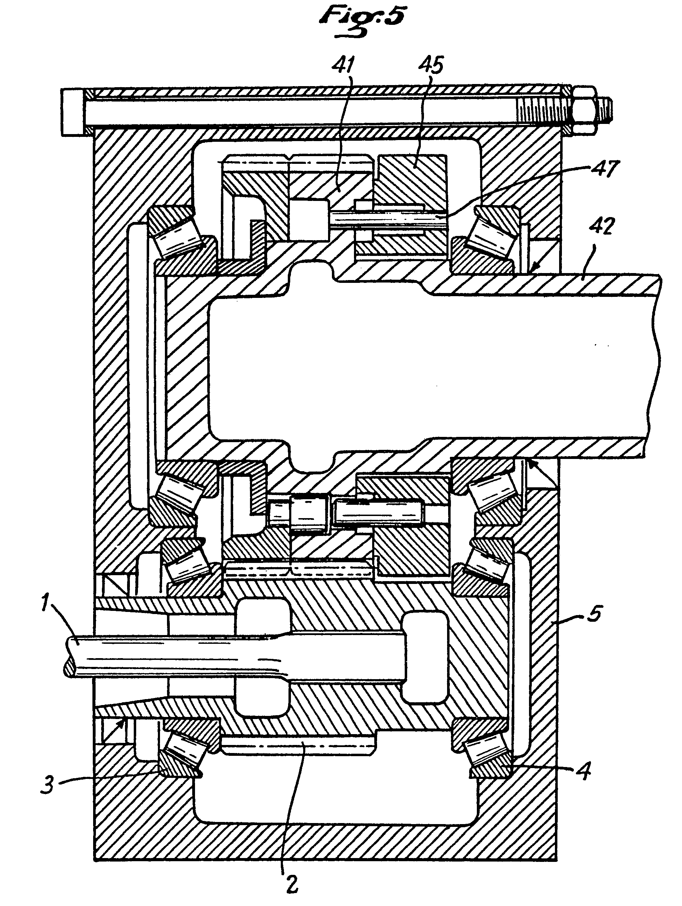

Les roues 7a et 7b peuvent être réunies par des barres élastiques 24 comme représenté à la partie inférieure des roues, sur la figure 1, ou par des ressorts 25, comme représenté à la partie supérieure de la figure 1 et sur la figure 2, à l'aide de cales 7'a et 7'b. Grâce aux ressorts 25, ou en variante aux barres 24, les roues 7a et 7b sont sollicitées en rotation l'une par rapport à l'autre de façon à supprimer le jeu entre les pignons 2 et 7, par création d'un couple $C_1$ interne à l'engrenage s'ajoutant au couple moteur $C_0$. En dehors de toute vibration, ce couple de précontrainte $C_1$ est donc appliqué à l'engrenage. Lorsqu'il y a vibration, le couple oscillatoire tend à séparer les dents des engrenages; il y a alors mouvement relatif de la roue 7b par rapport à la roue 7a. Cette disposition ne suffit pas toujours à supprimer les ruptures de contact entre les pignons 2 et 7, conformément à l'invention, il est prévu une liaison à coincement et frottement telle que représentée sur les figures 3 et 4, coopérant avec au moins une liaison élastique telle que représentée sur la figure 2.

La roue 7a, par exemple, est munie de deux butées 27, 28 entre lesquelles est logé sans jeu un coin 29 dans lequel est formée sur une partie de la longueur, une gouttière 30. Un coin similaire 32 mais de longueur moindre, avec une gouttière 33, est placé en position retournée contre la roue 7b, avec interposition éventuelle d'une garniture de frottement 35. Un ressort 36 est logé dans les deux gouttières 30, 33, de façon à solliciter les deux coins 29, 32 en coincement. Ce dispositif ne s'oppose pas au mouvement relatif de la roue 7b (en bas) vers la gauche sur la figure 4, mais il y a blocage si la roue 7b est sollicitée vers la droite lors des vibrations. La roue 7b peut cependant se déplacer vers la droite, avec frottement, par l'intermédiaire de la garniture 35. Le ressort 25 sollicite en rotation les deux pignons de façon à ce que la roue principale 7a soit en contact avec le pignon moteur 2. Le dispositif à coincement de la figure 4 ne s'y oppose pas car la force du ressort 36 est négligeable devant celle du ressort 25. Le ressort 36 sert seulement à maintenir les coins 29, 32 appliqués l'un contre l'autre. Si l'amplitude A du couple oscillatoire dépasse la somme $C_0 + C_1$ du couple moteur et du couple interne dû aux ressorts 25, les ressorts 25 sont alors sollicités en compression, dans le sens qui décolle les dents de la roue 7a des dents du pignon moteur 2. Mais, à un tel mouvement, s'oppose le coincement du dispositif de la figure 4, ce qui assure le maintien du contact des dentures. Ce n'est que si le couple oscillatoire est beaucoup plus fort qu'il y a glissement du coin 32 contre la roue 7b, avec dissipation d'énergie dans la garniture de frottement 35. Ce frottement permet de dissiper l'énergie vibratoire en chaleur et donc de diminuer les amplitudes des vibrations. L'amplitude du couple oscillant est diminuée et peut être maintenue inférieure à la valeur du couple moteur moyen, le cas échéant ajouté au couple interne $C_1$.

Selon une caractéristique importante de l'invention, les arbres d'entrée et de sortie (ou au moins l'un d'eux) comportent chacun une barre élastique de torsion ou barre d'accord. Les deux barres 1 et 10 sont montées de la même façon, entre un pignon 2, 7a et un manchon 12, 21. La barre élastique est solidaire en rotation, à une de ses extrémités du pignon, et à l'autre extrémité du manchon. Le machon d'entrée 21 transmet le couple moteur et le manchon de sortie 12 transmet le couple au récepteur. Chaque manchon est monté concentriquement à l'extérieur (manchon 12) ou à l'intérieur (manchon 21) d'une douille 16, 23. Entre le manchon et le pignon correspondant est montée une garniture ou couronne 17, 22, dissipatrice d'énergie, dans un plan perpendiculaire à l'axe de rotation, ou dans une surface de révolution quelconque.

La figure 5 représente une variante dans laquelle il n'y a qu'une barre élastique. Le pignon de sortie 41 est formé directement, ou fixé, sur le manchon de sortie 42. L'intérêt de ces barres d'accord est le suivant.

Comme il est connu de l'homme de l'art, l'ensemble des arbres et des pignons forme une ligne de transmission exposée à des vibrations d'oscillation, avec des noeuds et des ventres. De part et d'autre d'un noeud de vibration, les oscillations sont en sens inverses et, par suite, les éléments mécaniques qui sont le siège d'un noeud de vibration sont généralement ceux qui sont le plus fortement sollicités. Conformément à la présente invention, la maîtrise de l'emplacement des noeuds est possible grâce aux barres d'accord et les dimensions de chacune des barres sont choisies pour qu'elle soit le siège d'un noeud de vibration. Les dimensions transversales minimales sont déterminées bien entendu pour que la barre d'accord transmette le couple maximal du moteur. La géométrie adoptée (fig. 1) avec des douilles et des manchons permet de choisir la longueur de la barre d'accord dans de larges limites. Les dimensions des barres peuvent être déteminées par le calcul. Selon une méthode de calcul, on représente la ligne d'arbre par un modèle, c'est-à-dire une série de disques massiques séparés par des ressorts de torsion sans masse. Cette méthode est décrite complètement dans la thèse d'état de Monsieur Guy Louradour soutenue le 9 juillet 1981 à l'Université Pierre et Marie Curie à Paris: «Contribution à l'étude des arbres, applications au vilebrequin.» Cette thèse est donc incorporé, à titre de référence, dans la présente invention. Entre autres, y sont développées les méthodes de modélisation des lignes d'arbres et de calcul des modes propres. On y trouvera tous les éléments permettant de déterminer les emplacements des noeuds de vibration.

A partir de la modélisation de la ligne d'arbre, on calcule la valeur de la première pulsation propre (1er mode), puis on calcule la déformée modale du premier mode. Ensuite, on recherche les régimes critiques. Il y a lieu de faire un bilan des excitations. Pour une machine alternative, il est nécessaire de calculer l'importance des couples harmoniques, en tenant compte du maillage du vilebrequin et de l'ordre d'allumage. Un régime est dit critique si l'un des couples harmoniques majeurs a la même pulsation que la pulsation propre de la ligne d'arbre.

Si l'une des conditions énoncées (noeud de vibration dans le barre d'accord, pas de régime critique dans la plage de fonctionnement essentielle) n'est pas vérifiée, on recommence les calculs en modifiant une ou plusieurs dimensions de la barre d'accord.

Lorsque les conditions sont réalisées, il faut examiner les vitesses critiques données par le deuxième mode. Trois cas peuvent se présenter:

1) les régimes critiques sont tous supérieurs au régime maximal. Il n'est pas nécessaire alors d'installer une deuxième barre d'accord;

2) certains régimes critiques sont inférieurs au régime maximal, mais ils sont extérieurs à la zone de fonctionnement. Il faudra alors étudier le problème de la rupture de contact entre les dents et calculer l'amplitude du couple oscillatoire A. L'installation d'une deuxième barre d'accord s'avérera nécessaire si le deuxième noeud de vibration est situé dans un élément fragile de la ligne d'arbres;

3) un ou plusieurs régimes critiques sont situées dans la plage de fonctionnement essentielle.

Dans ce cas, la deuxième barre d'accord s'avère nécessaire. Les dimensions transversales minimales sont calculées pour qu'elle puisse transmettre le couple maximal. Avec cette condition, les dimensions sont calculées de telle sorte que:

a) les vitesses critiques relatives au deuxième mode n'appartiennent pas à la plage essentielle de fonctionnement; et,
b) le deuxième noeud de vibration soit situé dans cette barre.

La barre d'accord étant le siège du noeud de vibration, lorsque les oscillations de torsion se développent, le manchon 12 et la roue 7a ont des mouvements d'oscillation de sens contraires. Les frottement au niveau des surfaces de contact, dans la couronne 17, dissipe de l'énergie. Les amplitudes des vibrations seront donc diminuées.

La ou les barres d'accord étant dimensionnées, on connaît alors:

— les vitesses critiques,
— les déformées modales relatives à ces vitesses critiques. Pour tous les régimes critiques, on calcule l'amplitude du couple oscillatoire A et le couple $C_0$ (moteur ou récepteur) correspondant. On recherche le cas le plus défavorable pour la rupture du contact entre dents. Deux cas se présentent:

1) la différence $|A| - C_0 > 0$ est faible (de l'ordre de 10% de $C_0$) alors le pignon élastique seul peut être suffisant. On calcule les ressorts de telle sorte que le couple de précontrainte au montage soit légèrement supérieur à la différence $|A| - C_0$. Il faut vérifier que la pulsation propre du contre-pignon avec les ressorts de rattrapage de jeu ne correspond pas à l'une des pulsations des couples excitateurs;

2) la différence $A - C_0 > 0$ est importante (supérieure à 10% de $C_0$). Dans ce cas, il ne faut pas chercher à compenser cette différence avec le couple de précontrainte pour deux raisons:

a. le couple de précontrainte élevé diminuerait le rendement de l'engrenage;
b. le couple de précontrainte élevé augmenterait les dimensions de la denture.

Dans ce cas, il faut donc envisager les solutions technologiques suivantes:

— rendre le contre-pignon à rattrapage de jeu autobloquant;
— monter une masse sismique à côté du pignon;
— s'il s'agit du deuxième mode de vibration, utiliser la technologie de la barre d'accord pour amortir les vibrations.

Ces solutions peuvent être envisagées séparément ou ensemble. Bien entendu, tous ces calculs peuvent être effectués sur un ordinateur.

Les ressorts internes du pignon élastique ont pour rôle de rattraper constamment les jeux. En dehors de toute vibration, un couple $C_1$ (faible) de précontrainte est appliqué à l'engrenage. Lorsqu'il y a vibration, le couple oscillatoire A tend à séparer les dents des engrenages. Il y a alors mouvement relatif de la roue secondaire élastique par rapport à la roue principale. Le système autobloquant s'oppose à tout mouvement relatif tendant à séparer les dents d'engrenage. Par contre, il autorise tout mouvement relatif tendant à rattraper le jeu inter-dents.

Le système autobloquant basé sur le principe du frottement entre deux surfaces peut opposer un couple $C_2$ maximal limité par les surfaces en frottement et les coefficients de frottement de ces surfaces.

*1er cas*
$$|A| < C_0 + C_1 + C_2$$

Le système autobloquant est suffisant.

*2è cas*
$$|A| \simeq C_0 + C_1 + C_2 \text{ ou } |A| \text{ légèrement supérieur à } C_0 + C_1 + C_2$$

Dans ce cas, le couple $C_2$ que peut opposer le système autobloquant est juste suffisant. Cependant, l'énergie nécessaire à provoquer le glissement du système autobloquant est dissipée par frottement. Les amplitudes des oscillations vibratoires sont donc diminuées. Le système autobloquant se comporte comme un amortisseur de vibration.

*3è cas*
$$|A| > C_0 + C_1 + C_2$$

Dans ce cas, il y a glissement du système autobloquant et donc un amortissement important des vibrations de torsion qui tend à diminuer la valeur de A. On peut alors, dans ce cas, adopter une masse sismique.

Selon une autre caractéristique de l'invention, on dispose contre un pignon 41 (figure 5) une masse sismique 45. Cette masse, en forme de roue, ne possède aucune dent en liaison d'engrènement. Elle est placée contre le pignon 41 (équivalent à la roue principale 7') auquel elle est réunie par des liaisons élastiques 47, qui peuvent être des tiges ou des ressorts, permettant un certain débattement angulaire entre la masse et le pignon. Cette disposition permet de réduire encore l'amplitude des vibrations et d'éviter les ruptures de contact entre dentures quand les autres moyens ne sont pas suffisants. La masse sismique peut être calculée avec la même modélisation, en ajoutant un disque.

Enfin, une disposition complémentaire consiste à précontraindre le carter au moyen de boulons 51 (figure 1).

En résumé, les éléments technologiques permettant d'éviter la destruction des dentures par les vibrations de torsion sont:

— une ou deux barres d'accord situées de part et d'autre du mécanisme;
— une précontrainte de la denture;
— un système autobloquant évitant la perte de contact entre les dents;
— un amortissement interne diminuant sensiblement les couples oscillatoires, au moyen d'une masse sismique.

## Revendications

1. Dispositif de transmission mécanique incluant un engrenage comportant au moins un pignon (7) constitué de deux roues, une roue principale (7a) montée sur un arbre (10) et en engrènement avec un pignon (2) pour transmettre le couple moteur, et une roue secondaire (7b) de rattrapage de jeu non calée sur l'arbre, mais en engrènement avec le pignon, la roue principale et la roue secondaire étant sollicitées en rotation l'une par rapport à l'autre de façon à maintenir les dents de la roue principale (7a) en contact avec les dents du pignon (2), par création d'un couple interne amorti par un dispositif de frottement qui est prévu entre les deux roues du pignon (7) caractérisé en ce que le-dit dispositif de frottement comporte une liaison à coincement et frottement, autorisant la rotation libre de la roue secondaire (7b) par rapport à la roue principale (7a) dans le sens du rapprochement des dents de la roue principale vers les dents du pignon (2), et imposant un frottement prédéterminé à la rotation dans l'autre sens de la roue secondaire par rapport à la roue principale.

2. Dispositif selon la revendication 1, caractérisé en ce que la liaison à coincement et frottement comporte deux coins (29, 32) dont l'un est solidaire d'une roue et l'autre coin séparé de l'autre roue, par une garniture de frottement, les deux coins étant sollicités élastiquement vers la position de coincement.

3. Dispositif selon une des revendications 1 ou 2, incluant un organe moteur, un engrenage comportant au moins deux pignons en engrènement et un organe récepteur, caractérisé en ce qu'au moins l'une des liaisons moteur-engrenage, engrenage-récepteur, comporte un arbre élastique de transmission ou barre d'accord (1, 10) dont les dimensions sont choisies pour que cette barre d'accord soit le siège d'un noeud de vibration.

4. Dispositif selon la revendication 3, caractérisé en ce que les pièces mécaniques (2, 21 - 16, 12) solidaires des extrémités d'une barre d'accord (1, 10) sont en frottement l'une contre l'autre, avec interposition d'une garniture dissipatrice d'énergie (22, 17).

5. Dispositif selon une des revendications précédentes, caractérisé en ce qu'il comporte une masse sismique constituée par une roue juxtaposée à un pignon, et connecté à celui-ci par des moyens élastiques tels que ressorts ou tiges souples.

## Patentansprüche

1. Mechanische Übertragungsvorrichtung mit einem Getriebe, das mindestens ein Getrieberad (7) bestehend aus zwei Rädern, einem Hauptrad (7a), das auf einer Welle (10) angeordnet ist und in ein Getrieberad (2) eingreift, um das Motor-Drehmoment zu übertragen, und einem nicht auf der Welle befestigten, aber in das Getrieberad eingreifenden Nebenrad (7b) zum Nachstellen, wobei das Hauptrad und das Nebenrad in bezug aufeinander in Drehrichtung beansprucht werden, um die Zähne des Hauptrads (7a) mit den Zähnen des Getrieberads (2) durch Erzeugung eines durch eine zwischen den beiden Rädern des Getrieberads (7) vorgesehene Reibungsvorrichtung gedämpften inneren Drehmoments in Kontakt zu halten, dadurch gekennzeichnet, dass die Reibungsvorrichtung eine Verbindung durch Verkeilung und Reibung aufweist, die die freie Drehung des Nebenrads (7b) in bezug auf das Hauptrad (7a) in Richtung auf die Annäherung der Zähne des Hauptrads zu den Zähnen des Getrieberads (2) hin erlaubt und der Drehung des Nebenrads in die andere Richtung in bezug auf das Hauptrad eine vorbestimmte Reibung aufzwingt.

2. Vorrichtung nach Anspruch 1, dadurch gekennzeichnet, dass die Verbindung durch Verkeilung und Reibung zwei Keile (29, 32) aufweist, von denen einer fest mit einem Rad verbunden ist und der andere Keil vom anderen Rad durch eine Reibungseinrichtung getrennt ist, wobei die beiden Keile elastisch zur Verkeilungsposition hin beansprucht werden.

3. Vorrichtung nach einem der Ansprüche 1 oder 2 mit einem Motororgan, einem Getriebe mit mindestens zwei ineinander verzahnten Getrieberädern und einem Empfängerorgan, dadurch gekennzeichnet, dass mindestens eine der Verbindungen Motor-Getriebe, Getriebe-Empfänger eine elastische Übertragungswelle oder Einstellstange (1, 10) aufweist, deren Abmessungen so gewählt sind, dass diese Einstellstange der Sitz eines Vibrationsknotens ist.

4. Vorrichtung nach Anspruch 3, dadurch gekennzeichnet, dass die fest mit den Enden einer Einstellstange (1, 10) verbundenen mechanischen Teile (2, 21 - 16, 12) sich aneinander reiben, mit Zwischenschaltung einer Energieverteilungseinrichtung (22, 17).

5. Vorrichtung nach einem der vorhergehenden Ansprüche, dadurch gekennzeichnet, dass sie eine seismische Masse aufweist, dia aus einem neben einem Getrieberad angeordneten Rad besteht, das mit dem ersteren durch elastische Mittel wie Federn oder biegsame Stangen verbunden ist.

## Claims

1. Mechanical transmission device including a gear train comprising at least one gear wheel (7) constituted by two wheels, a main gear wheel (7a) mounted on a shaft (10) and meshing with another gear wheel (2) to transmit the driving torque, and a secondary gear wheel (7b) for taking up backlash, said secondary gear wheel not being fixed to said shaft, but meshing with said another gear wheel, means urging said main gear wheel and said secondary gear wheel to rotate relative to each other in such a manner as to maintain the teeth of said main gear wheel (7a) in contact with the teeth of said another gear wheel (2) setting up an internal torque, deadened by a friction device which is provided between main gear wheel and secondary gear wheel, characterised in that said friction device includes a wedging and friction link, enabling said secondary gear wheel (7b) to rotate freely relative to said main gear wheel (7a) in the direction tending to bring the teeth of said main gear wheel towards the teeth of said another gear wheel (2) and imposing predetermined friction for rotation of said secondary gear wheel in the opposite direction with regard to said main gear wheel.

2. Device according to claim 1, characterised in that the wedging and friction link comprises two wedges (29, 32), one of which is unitary with one wheel, and the other wedge is separated from the other wheel by a friction packing, both wedges resiliently urged into the wedging position.

3. Device according to one of claims 1 or 2, including a drive unit, a gear train comprising at least two wheels intermeshing together and a driven member, characterised in that at least one of the links drive unit-gear train, gear train-driven member, includes a resilient transmission shaft or tuning bar (1, 10) of dimensions so chosen that said tuning bar is the seat of vibration node.

4. Device according to claim 3, characterised in that the mechanical parts (2, 21 - 16, 12) unitary with the ends of one tuning bar (1, 10) are in frictional contact with one another, with an energy-dissipating fitting (22, 17) interposed therebetween.

5. Device according to any one of the preceding claims, characterised in that it includes an inertial mass constituted by a wheel juxtaposed with one gear wheel, and connected thereto by resilient means, such as springs or flexible rods.

Fig.1

0 166 059

*Fig. 2*

7'b

7a

25

7b

7'a

*Fig. 3*

7'b

25

7'a

*Fig. 4*

29    36    7a    30

27                    28

7b    33    35    32

9

Fig:5